# EUROPEAN PATENT APPLICATION

(11) **EP 3 001 898 A1**
(43) Date of publication of application: **06.04.2016**
(21) Application number: 14189081.4
(22) Date of filing: 15.10.2014
(51) Int. Cl.: A01K 5/01, A01K 15/02

(54) **Constructive arrangement introduced in dispenser toy ball for pets**

(30) Priority: 03.10.2014 WO PCT/BR2014/000362
(71) Applicant: Ishiwaka, Dalton Alexandre, 04016001 São Paulo (BR)
(72) Inventor: Ishiwaka, Dalton Alexandre, 04016001 São Paulo (BR)
(74) Representative: Pons Ariño, Angel

(57) **Abstract**

The dispenser toy ball (1) comprises two half ball parts (2A, 2B) and a central part (3) connectable by corresponding threads (12A, 12B) to the half ball parts (2A, 2B). The half ball parts (2A,2B) and the central part (3) comprise corresponding openings (6A, 6B, 15A, 15B), for allowing food be let in and out of the dispenser toy (1), and which may be kept fully or partially open or closed, according to levels of difficulty for the pet to obtain the food from the inside of the toy ball (1). It also comprises openings (5) for allowing the smell of food reach the pet's sense of smelling. The present invention may be used concomitantly for feeding, training and for amusing the pet.

## Description

### Field of application

The present invention refers to a constructive arrangement introduced as a dispenser toy in the form of a ball for pets, especially dogs and cats, which may be used simultaneously for feeding, training and for amusement.

### State of the Art

Different models of dispenser toys in ball form are currently available commercially. All have at least one opening for the entry and exit of food (treats or feed).

These objects are efficient for entertaining pets. However, the majority have problems in terms of hygiene due to the fact that they cannot be opened for cleaning.

Also, the dispenser toys in ball form rapidly lose their efficiency because they present either very high or very low levels of difficulty, which causes animals to lose interest.

Therefore, the need persists for alternatives that allow amusement, stimulating the animal's learning ability at different levels of difficulty and that are easy to clean.

### Brief Description of the Drawings

Without limitation, the object of the present invention is shown by the following drawings:
Figure 1 shows the assembled dispenser toy ball, consisting of the threading of two equivalent half-ball parts (2A and 2B) to the central part (3).
Figure 2 shows a top view of the parts (2A, 2B) where the projection (4), orifice (5), opening (6A) and projection (7) can be observed.
Figure 3 shows a top view of the parts (2A, 2B) where the auxiliary closing part (8), the opening (6B), the lock (9), recess (10), projection (11) and thread (12A) can be observed.
Figure 4 shows a side view of the central part (3) where the threads (12B) can be observed.
Figure 5 shows the top view of one of the sides of the central part (3) where the overlapping disc (13), lock pin (14), opening (15A and 15B) and projection (16A, 16B, 16C and 16D) can be observed.

### Description of the Invention

The present invention refers to a constructive arrangement introduced into a dispenser toy ball for pets, especially dogs and cats, which can be used simultaneously for feeding, training and for amusement.

Once supplied with food, the use of the dispenser toy according to the present invention does not depend on human intervention, that is, the training and amusement process does not depend on human interaction, unlike other equipments with the same purpose.

According to the present descriptive report, "pets" means all domestic companion animals, such as dogs, cats, large birds and large rodents for example.

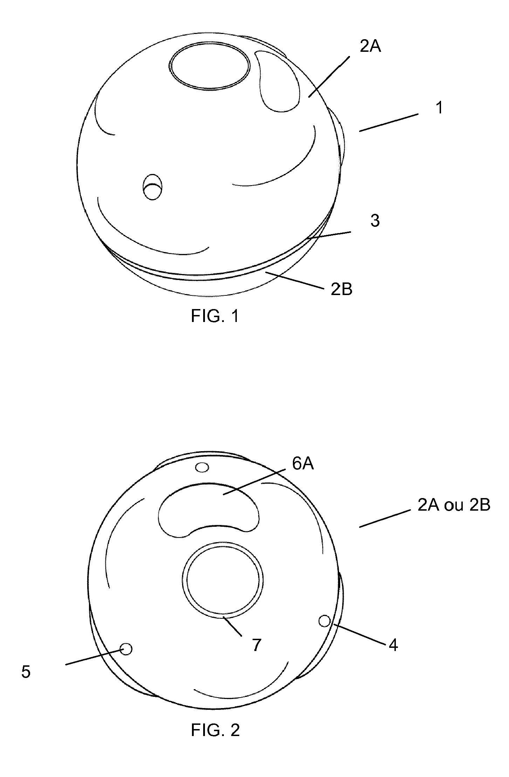

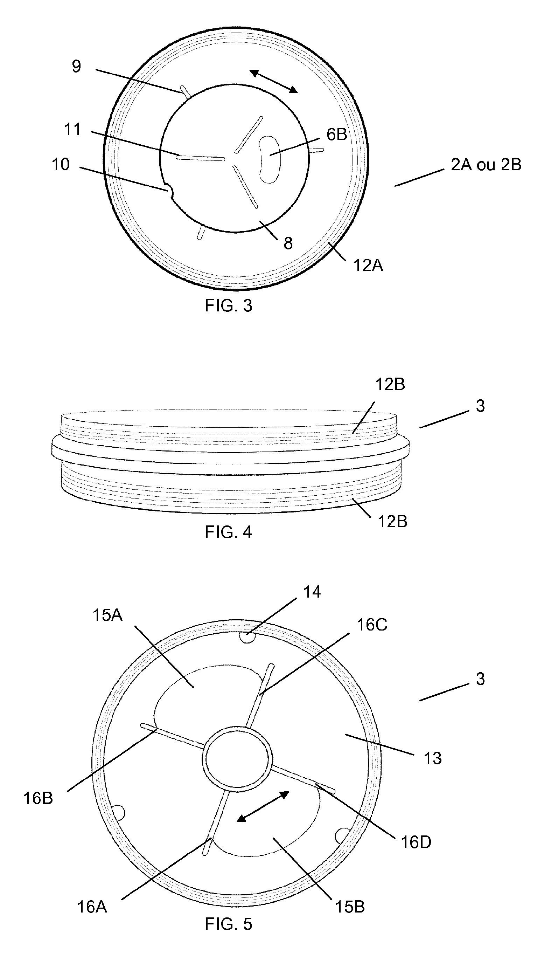

A constructive variant of the dispenser toy ball for pets, object of the present invention, is shown in figures 1 to 5 in annex.

Its use begins by storing food (treats or animal feed) inside the compartments (2A) and (2B) through the opening (6A, 6B) of the parts (2A, 2B) or opening (15A and 15B) of the central part (3) or even before threading the parts (2A, 2B) to the central part (3).

In order for the animal to have access to the food, it must execute the task of turning the dispenser toy ball so that the food comes out through the opening (6A, 6B) of the parts (2A, 2B), passing through the opening (15A and 15B) of the central part (3). The animal becomes entertained and at the same time feeds, as it is able to remove the food from inside the dispenser toy (1) according to the present invention through the opening (6A, 6B) of the parts (2A, 2B) or opening (15A and 15B) of the central part (3).

The levels of difficulty are determined by the different stages to be achieved, consisting of the opening (6A, 6B) of the parts (2A, 2B) or opening (15A and 15B) of the central part (3) with the aid of the closing part (8) and the overlapping disc (13) that respectively enables reduction of the diameter or even complete closing of the opening (6A, 6B) of the parts (2A, 2B) or opening (15A and 15B) of the central part (3).

The difficulty levels may vary according to the number of openings introduced into each part and their shapes. Especially an opening on the parts (2A, 2B) with size and shape coinciding with the opening on the auxiliary closing part (8) as well as two openings on the central part (3) with size and shape coinciding with the two openings on the overlapping disc (13) are used.

Therefore, considering the variant illustrated here as a particular object according to the present invention, it is possible to have three levels of difficulty.
1) Easy level (phase 1): where all the openings are free. In this case, part (2A) and part (2B) are unthreaded from the central part (3), all the openings (6A, 6B) and (15A and 15B) are released with the aid of the projections (11) and (16A, 16B, 16C and 16D) and the food is stored in the half-ball parts (2A and 2B). The half-ball parts (2A and 2B) are threaded to the central part (3).
2) Easy level (phase 2): the openings (6A, 6B) of the half-ball parts (2A and 2B) are gradually closed.
3) Easy level (phase 3): the openings (6A, 6B) of one of the half-ball parts (2A and 2B) remains completely closed and the openings (6A, 6B) of the other half-ball part (2A and 2B) remain partially closed.
4) Medium level (phase 1): where the openings of the central part (3) are blocked. In this case, the parts (2A) and (2B) are unthreaded from the central part (3). The openings (15A and 15B) of the central part (3) are blocked, turning the overlapping disc (13) with the aid of the projections (16A, 16B, 16C and 16D). The food is stored in the half-ball parts (2A and 2B) and these are threaded to the central part (3).
5) Medium level (phase 2): the openings (6A, 6B) of the half-ball parts (2A and 2B) are gradually closed.
6) Difficult level (phase 1): where the dispenser toy, according to the present invention, will be used as a "roly-poly toy". In this case the parts (2A and 2B) are unthreaded from the central part (3). The opening of one of the half-ball parts (2A or 2B) is completely closed with the aid of the projections (11). The food is stored in this part and closed. The opening (6A and 6B) to the other half-ball part (2A or 2B) is kept open, as well as the openings (15A and 15B) of the central part (3). The half-ball parts (2A and 2B) are threaded to the central part (3).
7) Difficult level (phase 2): the openings (15A and 15B) of the central part (3) are gradually closed.
8) Difficult level (phase 3): the opening (6A, 6B) of the open half-ball part (2A or 2B) is gradually closed.

As can be observed in these examples, the level of difficulty may vary according to the necessity and training phase of the animal, Allowing greater interactivity and use of the object for a longer period of time.

Hygiene is facilitated by the possibility of unthreading the half-ball parts (2A and 2B) so that, according to the present invention, the inner part of the dispenser toy can be completely washed.

The dispenser toy can be made of flexible plastic material, especially polypropylene. It can be colored, have bright colors to arouse the interest of the animal or it may be semi-transparent or transparent. In particular, the dispenser may be translucent, which stimulates three senses of the animal (hearing, smell and sight).

Even more particularly, it may contain antimicrobial protection through the use of additive in the raw material to be used in the manufacture of the dispenser toy.

Therefore, the object of the present invention is a dispenser toy ball for pets that contemplates various adjustment options for the exit of food, especially four adjustments for the exit of food, which is easy to assemble and can be available in different sizes, each one suitable for the size of the animal.

The dispenser toy ball for pets consists of two equivalent half-ball parts (2A and 2B) that have at least one projection (4) on their outer surface for resistance to rolling, at least one orifice (5) that facilitates the dissipation of the smell of the food to attract the animal, at least one opening (6A) for the entry and exit of food and projection (7) to keep the dispenser stable in a single position. The inner surfaces of the equivalent half-ball parts (2A and 2B) have an auxiliary rotating lock (8) with opening (6B) equivalent to opening (6A); to which the part (8) is attached with the aid of at least two locks (9) and contain at least one recess (10) to facilitate its insert and at least two projections (11) to facilitate its rotation to open or close the opening made by the coincidence of the two openings (6A) and (6B). The inner surfaces of the equivalent half-ball parts (2A and 2B) are equipped with thread (12A), which allows threading of this part to the thread (12B) of the central part (3), which has at least one opening (15) that will coincide with at least one opening (15A, 15B) present on the overlapping disc (13), it is attached to the central part (3) through at least one of the lock pins (14), and the rotation to open and close is facilitated by at least two projections (16A, 16B, 16C and 16D).

## Claims

1. Constructive arrangement introduced in dispenser toy ball for pets **characterized by** the fact that the dispenser toy (1) consists of two equivalent half-ball parts (2A and 2B), whose outer surfaces have at least one projection (4), at least one orifice (5), at least one opening (6A) and one projection (7) and the inner surfaces have an auxiliary rotating lock (8) with opening (6B) equivalent to the opening (6A); where the said part (8) contains at least two projections (11), being attached with aid of at least to locks (9) and at least one recess (10); where the inner surfaces of the equivalent half-ball parts (2A and 2B) have threads (12A) to allow them to be threaded to the thread (12B) of the central part (3), which in turn has at least one opening (15) that will coincide with at least one opening (15A, 15B) present on the overlapping disc (13) that has at least two projections (16A, 16B, 16C and 16D), being attached to the central part (3) through at least two lock pins (14).
